# EUROPEAN PATENT APPLICATION

(11) **EP 4 759 136 A1**
(43) Date of publication of application: **17.06.2026**
(21) Application number: 25217529.4
(22) Date of filing: 21.11.2025
(51) Int. Cl.: A01K 5/02

(54) **ELECTRONIC FEEDER**

(30) Priority: 16.12.2024 KR 20240187003; 20.01.2025 KR 20250007781
(71) Applicant: M3sen Co., Ltd., Seoul 08511 (KR)
(72) Inventor: SEO, Man Hyeong, 14507 Bucheon-si, Gyeonggi-do (KR); KIM, Geon Gon, 39811 Buksam-eup, Chilgok-gun, Gyeongsangbuk-do (KR); LEE, Hee Kwang, 18484 Hwaseong-si, Gyeonggi-do (KR)
(74) Representative: Kurig, Thomas

(57) **Abstract**

According to some embodiments of the present disclosure, an electronic feeder may comprise: a feeding container in which a discharge hole is formed; and an intake detection unit arranged below the discharge hole and configured to detect whether livestock has completed intake of feed, characterized in that the intake detection unit may comprise: a sensing shaft arranged below the discharge hole; a support frame connected to an end of the sensing shaft; and a rotation detection unit arranged in connection with the end of the sensing shaft and the support frame, the rotation detection unit being configured to detect rotation of the sensing shaft; and whether the livestock has completed feed intake may be detected based on whether the rotation of the sensing shaft is detected through the rotation detection unit.

## Description

### BACKGROUND

### 1. Technical Field

The present disclosure relates to an electronic feeder, and more particularly, to an electronic feeder capable of accurately determining whether livestock has completed intake of feed.

### 2. Related Art

Traditionally, in livestock farms, feed has been supplied to livestock such as pigs and cattle by breeders manually filling feeding containers with feed. This method makes it difficult for breeders to accurately monitor the feed intake status of the livestock in real time, frequently resulting in problems of feed shortage or excessive supply.

When feed is insufficient, it negatively affects the growth of the livestock. Conversely, if feed is excessively supplied, it may lead to livestock obesity, feed waste, and feed spoilage, thereby increasing the risk of disease and management costs. In addition, in conventional methods, it is difficult to maintain the hygiene of the feeding container, and it is not possible to immediately determine whether the livestock has completed feed intake, making it difficult to supply an appropriate amount of feed in a timely manner.

To solve such problems, there is a growing demand for an electronic feeder that can accurately detect whether livestock has completed feed intake, automatically discharge the feed, and facilitate hygiene management of the feeding container.

### SUMMARY

The present disclosure is intended to solve the aforementioned problems and other problems. A technical problem to be achieved by some embodiments of the present disclosure is to provide an electronic feeder capable of accurately determining whether livestock has completed feed intake.

The technical problems to be solved in the present disclosure are not limited to the technical problems mentioned above, and other technical problems not mentioned will be clearly understood by those skilled in the art from the description below.

According to some embodiments of the present disclosure, an electronic feeder comprises: a feeding container in which a discharge hole is formed; and an intake detection unit which is arranged below the discharge hole and configured to detect whether livestock has completed feed intake, wherein the intake detection unit comprises: a sensing shaft disposed below the discharge hole; a support frame connected to an end of the sensing shaft; and a rotation detection unit arranged in connection with the end of the sensing shaft and the support frame, the rotation detection unit being configured to detect rotation of the sensing shaft; and whether the livestock has completed feed intake may be detected based on whether the rotation of the sensing shaft is detected through the rotation detection unit.

According to some embodiments of the present disclosure, the intake detection unit may further comprise: a rotary block which is disposed on an outer circumferential surface of the sensing shaft; and a rotary wing which protrudes in a radial direction from the rotary block; and wherein the rotary wing is arranged in a plurality along a circumferential direction on the rotary block.

According to some embodiments of the present disclosure, the rotation detection unit may comprise: a magnetic unit which is disposed at the end of the sensing shaft; and an intake-detection sensor unit disposed on the support frame and configured to detect a magnetic variation of the magnetic unit.

According to some embodiments of the present disclosure, the intake-detection sensor unit may be disposed to be spaced apart from the magnetic unit by a predetermined distance.

According to some embodiments of the present disclosure, the support frame may comprise: a bearing unit configured to support rotation of the sensing shaft; a bearing accommodating section in which the bearing unit is received; and a sensor accommodating section formed on an inner side of the bearing accommodating section and in which the intake-detection sensor unit is received.

According to some embodiments of the present disclosure, the electronic feeder may further comprise a controller configured to: determine that livestock has completed feed intake when rotation of the sensing shaft is detected through the intake-detection sensor unit, and determine that the livestock is in the process of feeding when the rotation of the sensing shaft is not detected through the intake-detection sensor unit.

The technical means that can be obtained from the present disclosure are not limited to those mentioned above, and other technical means not mentioned will be clearly understood by those skilled in the art from the description below.

The advantageous effects of the electronic feeder according to the present disclosure are as follows.

According to some embodiments of the present disclosure, it is possible to accurately detect whether livestock has completed feed intake, thereby enabling appropriate supply and discharge of feed, and making it possible to prevent feed waste and livestock obesity.

According to some embodiments of the present disclosure, it is possible to monitor the feeding status of livestock in real time and to automatically supply and discharge an appropriate amount of feed, thereby improving the efficiency of livestock management.

According to some embodiments of the present disclosure, when remaining feed is automatically discharged after completion of feed intake, it is possible to reduce labor requirements and fundamentally prevent feed spoilage, thereby significantly improving the hygiene of the livestock rearing environment.

According to some embodiments of the present disclosure, it is possible to prevent excessive supply or shortage of feed, thereby reducing feed waste and saving costs associated with feed management and hygiene maintenance.

According to some embodiments of the present disclosure, appropriate feed supply and hygiene management may improve the rearing performance of livestock.

The advantageous effects that can be obtained through the present disclosure are not limited to the effects mentioned above, and other effects not mentioned will be clearly understood by those skilled in the art from the following description.

### BRIEF DESCRIPTION OF THE DRAWINGS

Various embodiments of the present disclosure are described with reference to the drawings, in which similar reference numbers are collectively used to refer to similar components. In the following embodiments, for the purpose of explanation, many specific details are provided to give a comprehensive understanding of one or more embodiments. However, it will be apparent that such embodiments may be implemented without these specific details.
FIG. 1 is a perspective view illustrating an electronic feeder according to an embodiment of the present disclosure.
FIG. 2 is a plan view illustrating the electronic feeder according to an embodiment of the present disclosure.
FIG. 3 is a side view illustrating the electronic feeder according to an embodiment of the present disclosure.
FIG. 4 is a rear view illustrating the electronic feeder according to an embodiment of the present disclosure.
FIG. 5A is a cross-sectional view illustrating one embodiment of a spray pipe and a spray hole according to an embodiment of the present disclosure.
FIG. 5B is a cross-sectional view illustrating another embodiment of the spray pipe and the spray hole according to an embodiment of the present disclosure.
FIG. 5C is a cross-sectional view illustrating the spray pipe and the spray hole disclosed in FIG. 5B.
FIG. 6 is a perspective view illustrating a discharge unit according to an embodiment of the present disclosure.
FIG. 7 is a cross-sectional view of the B-B' section disclosed in FIG. 6.
FIG. 8 is an operational view illustrating a state in which an open-close frame opens an open-close port according to an embodiment of the present disclosure.
FIG. 9 is a cross-sectional view illustrating another embodiment of a repulsion unit according to an embodiment of the present disclosure.
FIG. 10 is an enlarged view of the C section disclosed in FIG. 7.
FIG. 11 is a perspective view illustrating an intake detection unit according to an embodiment of the present disclosure.
FIG. 12 is a perspective view illustrating a discharge shaft, blade, and drive unit according to an embodiment of the present disclosure.
FIG. 13 is a view illustrating another embodiment of a screw unit according to an embodiment of the present disclosure.
FIG. 14 is a view illustrating a structure of the drive unit according to an embodiment of the present disclosure.
FIG. 15 is a perspective view illustrating an open-close detection unit according to an embodiment of the present disclosure.
FIG. 16 is a view illustrating the open-close detection unit from another angle according to an embodiment of the present disclosure.
FIG. 17A is a flowchart illustrating one embodiment of a control method for the electronic feeder according to an embodiment of the present disclosure.
FIG. 17B is a flowchart illustrating another embodiment of the control method for the electronic feeder according to an embodiment of the present disclosure.
FIG. 17C is a flowchart illustrating yet another embodiment of the control method for the electronic feeder according to an embodiment of the present disclosure.

### DETAILED DESCRIPTION

Hereinafter, various embodiments of the electronic feeder according to the present disclosure will be described in detail with reference to the drawings. In the drawings, the same reference numerals are assigned to the same or similar components regardless of figure numbers, and redundant descriptions thereof will be omitted.

The objects and advantages of the present disclosure, as well as the technical configurations for achieving them, will become apparent from the embodiments described in detail below with reference to the accompanying drawings. In the description of one or more embodiments of the present disclosure, detailed explanations of known technologies related to the present disclosure may be omitted if they are deemed to obscure the gist of at least one embodiment of the present disclosure.

The terms used in the present disclosure are defined in consideration of the functions of the present disclosure and may vary depending on the intentions or practices of users or operators. In addition, the accompanying drawings are merely provided to facilitate understanding of one or more embodiments of the present disclosure, and the technical spirit of the present disclosure is not limited by the drawings. It should be understood that all modifications, equivalents, and substitutions included within the spirit and scope of the present invention are encompassed by the present disclosure.

In the following description, the suffixes "module" and "unit" attached to the components are assigned or used interchangeably merely for ease of explanation of the present disclosure, and do not by themselves have distinct meanings or roles.

Terms including ordinals such as "first," "second," and the like may be used to describe various components, but the components are not limited by such terms. These terms are used only for the purpose of distinguishing one component from another. Therefore, a "first" component referred to below may be a "second" component within the technical spirit of the present disclosure.

When a component is referred to as being "connected" or "coupled" to another component, it should be understood that the component may be directly connected or coupled to the other component, or that one or more other components may be interposed therebetween. In contrast, when a component is referred to as being "directly connected" or "directly coupled" to another component, it should be understood that there are no other components interposed therebetween.

Singular expressions shall be understood to include plural expressions unless clearly indicated otherwise from the context. That is, unless specifically stated or clearly indicated otherwise from the context that a singular form is intended, the singular shall be interpreted as meaning "one or more" in the present disclosure and the claims.

In the present disclosure, terms such as "comprise," "include," or "having" are intended to specify the presence of stated features, numbers, steps, operations, components, parts, or combinations thereof, but are not intended to preclude the presence or addition of one or more other features, numbers, steps, operations, components, parts, or combinations thereof.

In the present disclosure, the term "or" is to be understood as having an inclusive meaning, not an exclusive meaning. That is, unless specifically stated or clearly indicated otherwise from the context, the expression "X uses A or B" is intended to mean any of the natural inclusive substitutions: X uses A; X uses B; or X uses both A and B. Also, the term "and/or" as used in the present disclosure is to be understood as encompassing any and all combinations of one or more of the listed items.

Unless otherwise defined, all terms (including technical and scientific terms) used in the present disclosure shall be interpreted as having meanings commonly understood by those of ordinary skill in the art to which the present disclosure pertains. Terms that are generally used and defined in dictionaries shall not be interpreted in an overly broad or overly narrow sense unless explicitly defined otherwise herein.

However, the present disclosure is not limited to the embodiments disclosed below, and may be implemented in various different forms. The embodiments of the present disclosure are merely provided to fully convey the scope of the present disclosure to those of ordinary skill in the art, and the present disclosure is only defined by the scope of the claims. Therefore, the definition of the present disclosure shall be made based on the overall content of the present disclosure.

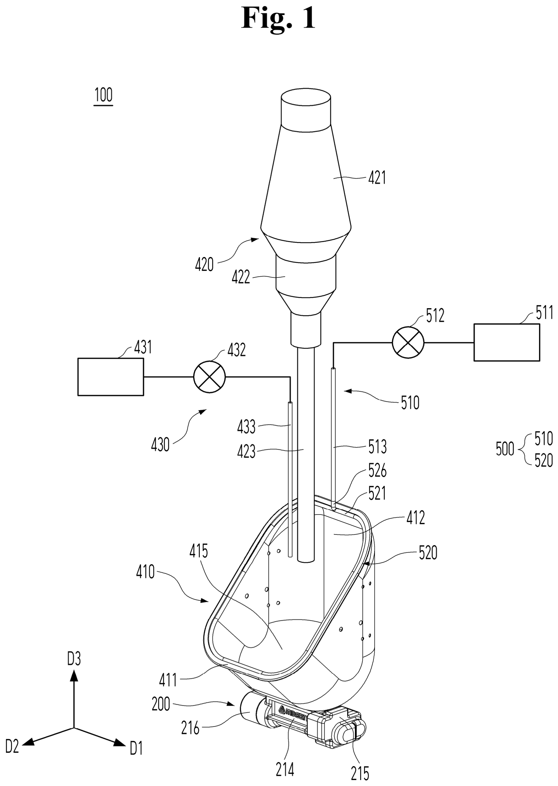

Referring to FIGS. 1 to 16, an electronic feeder according to an embodiment of the present disclosure may include a feeding container 410, a feed supply unit 420, a drinking-water supply unit 430, a discharge unit 200, an intake detection unit 300, and a cleaning unit 500. However, the above-described components are not essential components of the electronic feeder, and the electronic feeder may include more or fewer components than those described above.

Although not illustrated in the drawings, the electronic feeder may further include a controller. According to some embodiments of the present disclosure, the controller may be electrically connected to each component and may be configured to collectively control operations of the electronic feeder. Specifically, the controller may monitor and control, in real time, whether the livestock has completed intake, the discharge status of the feed, and the cleaning status of the feeding container.

Referring to FIGS. 1 to 4, the feeding container 410 may be a container in which feed or drinking water is contained.

The feeding container 410 may include an intake section 411, a guard section 412, a discharge hole 413, and a curved section 415. However, these components are not essential components of the feeding container 410, and the feeding container 410 may include more or fewer components than those described above.

The intake section 411 may be formed on one side of an upper portion of the feeding container 410. The head of livestock may enter the inside of the feeding container 410 through the intake section 411 and consume feed or drinking water contained in the feeding container 410.

The guard section 412 may be formed on the other side of an upper portion of the feeding container 410. With reference to a second direction D2, the guard section 412 and the intake section 411 may be positioned opposite to each other.

In addition, the guard section 412 may be formed higher than the intake section 411.

In an embodiment of the present disclosure, an upper end of the guard section 412 and an upper end of the intake section 411 may be connected to each other, and the height may increase from the upper end of the intake section 411 toward the upper end of the guard section 412.

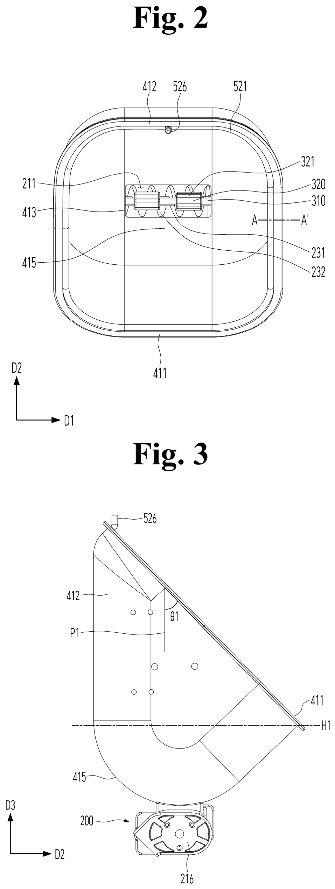

Referring to FIG. 3, an upper end of the intake section 411 and an upper end of the guard section 412 may form a first angle θ₁ based on a first reference line P1. According to this structure, livestock can insert its head into the intake section 411 to easily consume feed, and the guard section 412 can prevent or minimize feed from escaping the feeding container 410. However, the present disclosure is not limited thereto.

In addition, the guard section 412 may prevent or minimize feed or drinking water from escaping the feeding container 410 when feed is supplied from the feed supply unit 420 or drinking water is supplied from the drinking-water supply unit 430.

The discharge hole 413 may be disposed at a lower portion of the feeding container 410. Feed or drinking water may fall through the discharge hole 413 into the discharge unit 200 and be discharged.

The curved section 415 may be formed at a lower portion of the feeding container 410. The curved section 415 may form a curved surface toward the discharge hole 413. When feed or drinking water contained in the feeding container 410 is discharged, the feed or drinking water may move along the curved section 415 and be guided toward the discharge hole 413. Accordingly, it is possible to prevent or minimize the feed or drinking water from remaining in the feeding container 410. However, the present disclosure is not limited thereto, and the curved section 415 may not be present in the feeding container 410.

Referring to FIG. 1, the feed supply unit 420 may supply feed to the feeding container 410.

The feed supply unit 420 may include a feed tank 421, a feed-control valve 422, and a feed supply pipe 423. However, these components are not essential components of the feed supply unit 420, and the feed supply unit 420 may include more or fewer components than those described above.

Feed may be stored in the feed tank 421. Feed may be filled into the feed tank 421 by a separate feed transfer facility. However, the present disclosure is not limited thereto.

The feed-control valve 422 may be connected to a lower portion of the feed tank 421 and may control the supply of feed. The feed-control valve 422 may be an electronically controlled valve. In an embodiment of the present disclosure, the controller may control the feed-control valve 422 to open it when preset conditions are satisfied, or at specific times or intervals, so that feed is supplied to the feeding container 410.

An upper portion of the feed supply pipe 423 may be connected to the feed-control valve 422, and a lower portion of the feed supply pipe 423 may be inserted into the feeding container 410. Accordingly, feed discharged from the feed supply pipe 423 may be stored inside the feeding container 410, and it is possible to prevent or minimize feed from escaping the feeding container 410.

In an embodiment of the present disclosure, the feed supply pipe 423 may be arranged in an up-down direction D3, and a lower portion of the feed supply pipe 423 may be disposed adjacent to the guard section 412. However, the present disclosure is not limited thereto.

Livestock may insert its head into the feeding container 410 through the intake section 411 to consume feed. If a lower end of the feed supply pipe 423 is positioned excessively low inside the feeding container 410, the head of the livestock may collide with the feed supply pipe 423 or the feed supply pipe 423 may interfere with the livestock's feeding behavior. Therefore, since the livestock inserts its head through the intake section 411, it may be desirable to position the feed supply pipe 423 at the guard section 412. This can prevent or minimize the head of the livestock from bumping into the feed supply pipe 423 or being obstructed while feeding, even when the livestock inserts its head into the feeding container 410 through the intake section 411. However, the present disclosure is not limited thereto.

In addition, as shown in FIG. 3, since the upper end of the guard section 412 forms a first angle θ₁ and is inclined upward, the guard section 412 can prevent feed discharged from the feed supply pipe 423 from escaping in directions other than into the feeding container 410. The feed discharged from the feed supply pipe 423 may stably fall into the feeding container 410 by the guard section 412.

In addition, referring to FIG. 3, if the top reference line H1 of the intake section 411 is defined as the highest point of the intake section 411, feed discharged from the feed supply pipe 423 may be filled up to the top reference line H1. Alternatively, feed may be slightly accumulated above the top reference line H1 in a region inside the feeding container 410 that is adjacent to the guard section 412. However, the present disclosure is not limited thereto.

A lower portion of the feed supply pipe 423 may be positioned higher than the top reference line H1. According to this structural arrangement, when the head of livestock enters the inside of the feeding container 410, it is possible to prevent the head from colliding with the feed supply pipe 423 or to reduce the frequency of collisions. However, the present disclosure is not limited thereto.

Referring to FIG. 1, the drinking-water supply unit 430 may supply drinking water to the feeding container 410.

The drinking-water supply unit 430 may include a water tank 431, a water-control valve 432, and a water supply pipe 433. However, these components are not essential components of the drinking-water supply unit 430, and the drinking-water supply unit 430 may include more or fewer components than those described above.

Drinking water may be stored in the water tank 431, and the water tank 431 may be filled with drinking water by a separate water transfer facility.

The water-control valve 432 may be connected to the water tank 431 and may control the supply of drinking water. The water-control valve 432 may be an electronically controlled valve. In an embodiment of the present disclosure, the controller may control the water-control valve 432 to open it when preset conditions are satisfied, or at specific times or intervals, so that drinking water is supplied to the feeding container 410.

An upper portion of the water supply pipe 433 may be connected to the water-control valve 432, and a lower portion of the water supply pipe 433 may be inserted into the feeding container 410. Accordingly, drinking water discharged from the water supply pipe 433 may be stably filled inside the feeding container 410, and it is possible to prevent or minimize the drinking water from escaping the feeding container 410.

In an embodiment of the present disclosure, the water supply pipe 433 may be arranged in an up-down direction D3 like the feed supply pipe 423, and a lower portion of the water supply pipe 433 may be disposed at the guard section 412.

Livestock may insert its head into the feeding container 410 through the intake section 411 to drink drinking water. If a lower portion of the water supply pipe 433 is positioned excessively low inside the feeding container 410, the head of the livestock may collide with the water supply pipe 433, or the water supply pipe 433 may interfere with the livestock's drinking behavior. Therefore, since the livestock inserts its head through the intake section 411, it may be desirable to position the water supply pipe 433 at the guard section 412. This may prevent or minimize the livestock's head from bumping into the water supply pipe 433 or from being obstructed while drinking water, even when the livestock inserts its head into the feeding container 410. However, the present disclosure is not limited thereto.

In addition, referring to FIG. 3, since an upper end of the guard section 412 forms a first angle θ₁ and is inclined upward, the guard section 412 may prevent drinking water supplied from the water supply pipe 433 from escaping in directions other than into the feeding container 410. The drinking water supplied from the water supply pipe 433 may stably fall into the feeding container 410 by the guard section 412.

Also, referring to FIG. 3, when a top reference line H1 of the intake section 411 is defined, the drinking water supplied from the water supply pipe 433 may be filled up to the top reference line H1.

A lower portion of the water supply pipe 433 may be positioned higher than the top reference line H1. According to this structural arrangement, when the head of the livestock enters the inside of the feeding container 410, it is possible to prevent the head from colliding with the water supply pipe 433 or to reduce the frequency of collisions. However, the present disclosure is not limited thereto.

Referring to FIGS. 1 to 5C, the cleaning unit 500 may spray cleaning water into the feeding container 410 to clean the feeding container 410. Specifically, the cleaning unit 500 may be disposed around an upper circumference of the feeding container 410 and may spray cleaning water onto an inner wall portion 410a of the feeding container 410. The cleaning water sprayed along the upper circumference of the feeding container 410 may move downward along the inner wall portion 410a to clean the interior of the feeding container 410. The cleaning water may be discharged through the discharge hole 413 into the discharge unit.

The cleaning unit 500 may include a cleaning-water supply unit 510 and a cleaning-water spray unit 520.

The cleaning-water supply unit 510 may supply cleaning water to the cleaning-water spray unit 520. The cleaning-water supply unit 510 may include a cleaning-water tank 511, a cleaning-water control valve 512, and a cleaning-water supply pipe 513. However, these components are not essential components of the cleaning-water supply unit 510, and the cleaning-water supply unit 510 may include more or fewer components than those described above.

Cleaning water may be stored in the cleaning-water tank 511. The cleaning-water supply pipe 513 may connect the branch pipe 526 to the cleaning-water tank 511. The cleaning-water control valve 512 may be disposed in the cleaning-water supply pipe 513 and may control the flow rate of the cleaning water flowing from the cleaning-water tank 511 to the branch pipe 526 inside the cleaning-water supply pipe 513.

The cleaning-water spray unit 520 may be disposed along an inner circumference at an upper portion of the feeding container 410, and may spray cleaning water onto an inner wall portion 410a of the feeding container 410.

The cleaning-water spray unit 520 may include a spray pipe 521, spray holes 523, and a branch pipe 526. However, these components are not essential components of the cleaning-water spray unit 520, and the cleaning-water spray unit 520 may include more or fewer components than those described above.

The spray pipe 521 may be disposed along the inner circumference of the inner wall portion 410a at an upper portion of the feeding container 410. In an embodiment of the present disclosure, since the inner circumference of the feeding container 410 is generally rectangular, the spray pipe 521 may have a rectangular shape. However, the present disclosure is not limited thereto.

Referring to FIG. 3, an upper portion of the feeding container 410 may be inclined at a first angle θ₁. Since the spray pipe 521 is disposed along the inner circumference at the upper portion of the feeding container 410, it may also be inclined at the first angle θ₁.

Therefore, the spray pipe 521 may be disposed across both the intake section 411 and the guard section 412. Cleaning water sprayed from the spray pipe 521 may flow downward along the intake section 411 and the guard section 412 to clean the interior of the feeding container 410.

The spray holes 523 may be arranged in plurality along a circumference of the spray pipe 521. In an embodiment of the present disclosure, the spray holes 523 may be arranged in plurality at predetermined intervals along the circumference of the spray pipe 521, but the present disclosure is not limited thereto.

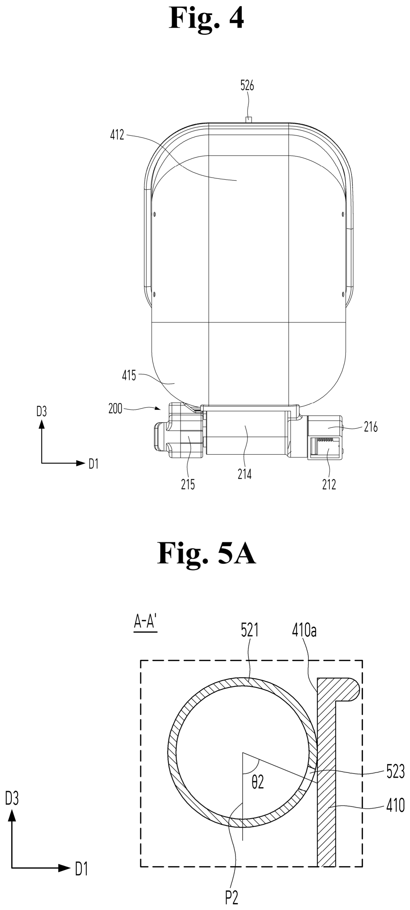

Referring to FIG. 5A, in an embodiment of the present disclosure, the spray holes 523 may be arranged at a second angle θ₂ with respect to a second reference line P2 parallel to the inner wall portion 410a from the spray pipe 521. Accordingly, cleaning water sprayed from the spray holes 523 may be directed toward the inner wall portion 410a. The cleaning water may be sprayed downward at the second angle θ₂ and directly reach the inner wall portion 410a. Thereafter, the cleaning water may flow downward along the inner wall portion 410a to clean the interior of the feeding container 410.

If the spray holes 523 are arranged vertically, without being inclined from the spray pipe 521, the cleaning water sprayed from the spray holes 523 may fall directly to a lower portion of the feeding container 410 without reaching the inner wall portion 410a. In this case, the interior of the feeding container 410 may not be properly cleaned, potentially causing hygiene issues. Therefore, it may be desirable for the spray holes 523 to be inclined toward the inner wall portion 410a.

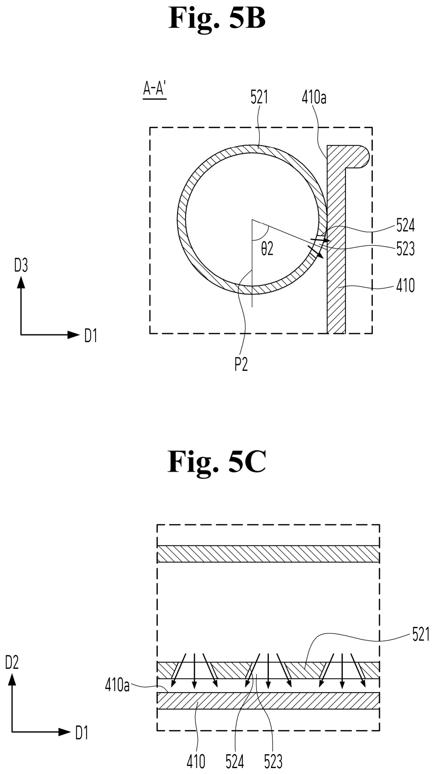

Meanwhile, referring to FIGS. 5B and 5C, the spray holes 523 may further include expansion portions 524. The expansion portions 524 may be formed inside the spray holes 523. The expansion portions 524 may become wider toward the direction of the inner wall portion 410a from the spray pipe 521.

Accordingly, the cleaning water sprayed from the spray holes 523 may spread out as shown by arrows and may collide with the inner wall portion 410a. This may allow cleaning water to also be sprayed onto the inner wall portion 410a located between adjacent spray holes 523 among the plurality of spray holes 523, so that cleaning water can be sprayed without omission onto the inner wall portion 410a of the feeding container 410. However, the present disclosure is not limited thereto.

Referring to FIG. 1, the branch pipe 526 may be connected to the spray pipe 521 and may protrude upward. The branch pipe 526 may be connected to a portion of the spray pipe 521 disposed at the guard section 412 of the feeding container 410. Specifically, the branch pipe 526 may be connected to a middle portion of the spray pipe 521 disposed at the guard section 412 of the feeding container 410. However, the present disclosure is not limited thereto.

Cleaning water flowing from the cleaning-water supply pipe 513 into the branch pipe 526 may be branched in both directions in the branch pipe 526 and may flow inside the spray pipe 521. As described above, since the spray pipe 521 is inclined at a first angle θ₁ from the guard section 412 toward the intake section 411, the cleaning water may flow from the guard section toward the intake section 411 by gravity.

Since a plurality of spray holes 523 are formed on the spray pipe 521, the cleaning water may be sprayed from each of the spray holes 523 toward the inner wall portion 410a of the feeding container 410 while flowing from the guard section 412 toward the intake section 411 inside the spray pipe 521. Accordingly, the inner wall portion 410a of both the guard section 412 and the intake section 411 may be smoothly cleaned.

The cleaning unit 500 according to an embodiment of the present disclosure may thoroughly clean the inner wall portion 410a of the feeding container 410 through the above-described configuration, thereby improving the hygiene of the feeding container 410.

Meanwhile, according to some embodiments of the present disclosure, although the drinking-water supply unit 430 and the cleaning unit 500 have been illustrated and described separately, the cleaning unit 500 may spray not only cleaning water for cleaning the feeding container 410, but also a liquid that can be used as drinking water.

Specifically, the cleaning-water supply unit 510 and the cleaning-water spray unit 520 may also serve the function of the drinking-water supply unit 430 that supplies drinking water to the feeding container 410. In this case, the cleaning-water tank 511 of the cleaning unit 500 may store a liquid that can also be used as drinking water, and drinking water may be stably supplied to the feeding container 410 through the cleaning-water control valve 512 and the cleaning-water supply pipe 513.

According to some embodiments, since drinking water can be supplied by using the cleaning unit 500 without a separate drinking-water supply unit 430, it is possible to achieve structural simplification and reduce cost.

Referring to FIGS. 1 and 6 to 16, the discharge unit 200 may be connected to the feeding container 410 and may discharge feed or drinking water. In an embodiment of the present disclosure, the discharge unit 200 may be disposed at a lower portion of the feeding container 410 and may be connected to the discharge hole 413.

The discharge unit 200 may include a housing 210, a drive unit 220, a discharge shaft 231, a blade 232, an open-close unit 250, a foreign-substance removal bar 260, an open-close detection unit 280, and a repulsion unit 270. These components are not essential components of the discharge unit 200, and the discharge unit 200 may include more or fewer components than those described above.

The housing 210 may be connected to the discharge hole 413 at a lower portion of the feeding container 410.

The housing 210 may include a plurality of accommodation spaces for accommodating the drive unit 220, discharge shaft 231, blade 232, open-close unit 250, foreign-substance removal bar 260, open-close detection unit 280, and repulsion unit 270.

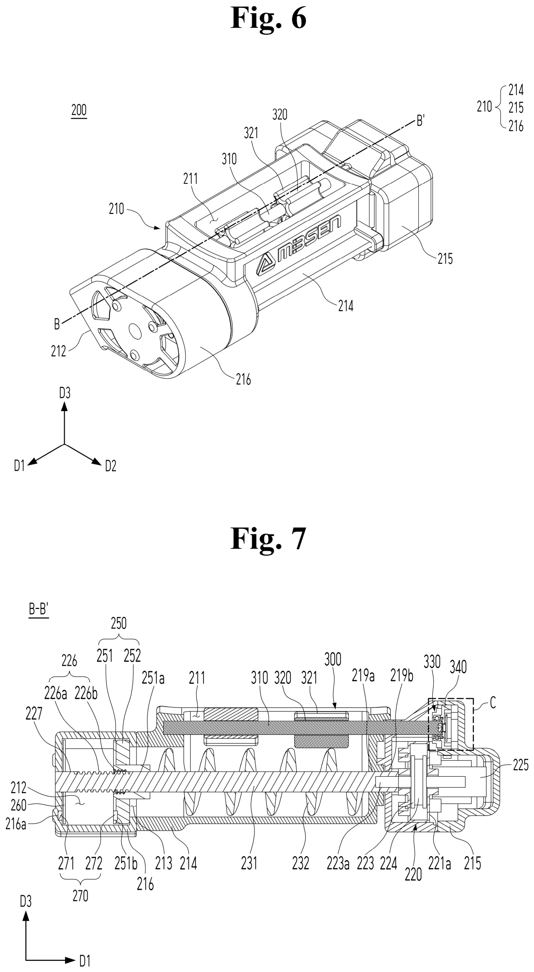

Referring to FIGS. 6 and 7, the housing 210 may include an opening 211, a discharge port 212, an open-close port 213, a first casing 214, a second casing 215, a third casing 216, and a bar hole 218.

The first casing 214, second casing 215, and third casing 216 may be formed as an integral structure to constitute the housing 210, or at least one of them may be separately formed and assembled to constitute the housing 210. However, the present disclosure is not limited thereto.

The first casing 214 may be placed in a central portion of the housing 210. Based on a first direction D1, a second casing 215 may be arranged on one side of the housing 210, and a third casing 216 may be arranged on the other side of the housing 210. The first casing (214), the second casing (215), and the third casing (216) may be partitioned and separated from each other.

The first casing 214 may accommodate the discharge shaft 231, blade 232, sensing shaft 310, and rotary block 320.

An internal space of the first casing 214 may be large enough to allow rotation of the discharge shaft 231, blade 232, sensing shaft 310, and rotary block 320. An opening 211 may be formed at the upper portion of the first casing 214.

The opening 211 may be formed at a position corresponding to the discharge hole 413 at an upper portion of the housing 210. The opening 211 may communicate the discharge hole 413 and the first casing 214. Accordingly, feed or drinking water discharged from the discharge hole 413 may fall into the internal space of the first casing 214 of the housing 210 through the opening 211.

An internal space of the second casing 215 may include a motor 225, a power-transmission mechanism 221, a rotation detection unit 330, and a support frame 340. The second casing 215 may be partitioned and spatially separated from the first casing 214. Accordingly, feed or drinking water introduced into the first casing 214 may not be introduced into the second casing 215. Although not shown in the drawings, a first shaft hole 219a and a second shaft hole 219b may be sealed. Therefore, feed, drinking water, or foreign substances may not be introduced from the first casing 214 into the second casing 215 through the first shaft hole 219a and the second shaft hole 219b. This may prevent feed, drinking water, or foreign substances from being introduced into the motor 225 disposed in the second casing 215. Accordingly, it is possible to prevent feed, drinking water, foreign substances, and the like from flowing into the motor 225 and thereby causing failure, damage and the like to the motor 225.

An internal space of the third casing 216 may accommodate the open-close unit 250. The third casing 216 and the first casing 214 may communicate with each other through the open-close port 213. When the open-close unit 250 opens the open-close port 213, the first casing 214 and the third casing 216 may be in communication.

When the open-close unit 250 closes the open-close port 213, the first casing 214 and the third casing 216 may be spatially separated. When the open-close unit 250 seals the opening-closing port 213, feed or drinking water may accumulate in the first casing 214.

Also, the third casing 216 may be provided with a discharge port 212.

Specifically, the discharge port 212 may be formed in the third casing 216 at the other side of the housing 210. Feed or drinking water introduced into the first casing 214 may flow into the third casing 216 when the open-close port 213 is open, and may be discharged to the outside through the discharge port 212. Referring to FIG. 4, the discharge port 212 may be formed at a rear portion of the third casing 216 with a relatively large size. Therefore, feed or drinking water may be smoothly discharged to the outside through the discharge port 212. However, the present disclosure is not limited thereto.

Referring to FIGS. 7, 12, and 14, the drive unit 220 may be disposed in the internal space of the second casing 215, and may rotate the discharge shaft 231. As the discharge shaft 231 rotates, the open-close unit 250 may move in a first direction D1 by a screw unit 226 to open or close the open-close port 213.

The drive unit 220 may include a case 221a, a motor 225, a first pulley 222, a second pulley 223, and a timing belt 224. These components are not essential components of the drive unit 220, and the drive unit 220 may include more or fewer components than those described above.

The motor 225 may be disposed in the internal space of the second casing 215. At this time, a drive shaft of the motor 225 may be positioned toward the first direction D1. The motor 225 according to an embodiment of the present disclosure may be a motor capable of bidirectional rotation.

The case 221a may be disposed in the internal space of the second casing 215, and a predetermined space may be formed therein.

The first pulley 222 may be disposed inside the case 221a and may be connected to a drive shaft of the motor 225. A plurality of gear teeth (not shown) may be formed on an outer circumferential surface of the first pulley 222.

The second pulley 223 may be disposed inside the case 221a and may be connected to an end of the discharge shaft 231. A link shaft 223a may be disposed at a rotational center of the second pulley 223, and the link shaft 223a may be connected to the end of the discharge shaft 231. Also, a plurality of gear teeth (not shown) may be formed on an outer circumferential surface of the second pulley 223.

The timing belt 224 may be disposed inside the case 221a and may connect the first pulley 222 and the second pulley 223. A plurality of gear teeth (not shown) may be formed on an inner surface of the timing belt 224.

The gear teeth of the timing belt 224 may engage with the gear teeth of the first pulley 222 and the gear teeth of the second pulley 223. Accordingly, when the first pulley 222 rotates, the timing belt 224 may stably transmit rotational force to the second pulley 223. However, the present disclosure is not limited thereto.

The first pulley 222, second pulley 223, and timing belt 224 may form a power transmission member 221. The power transmission member 221 may be housed in the case 221a and may be disposed in an internal space of the second casing 215.

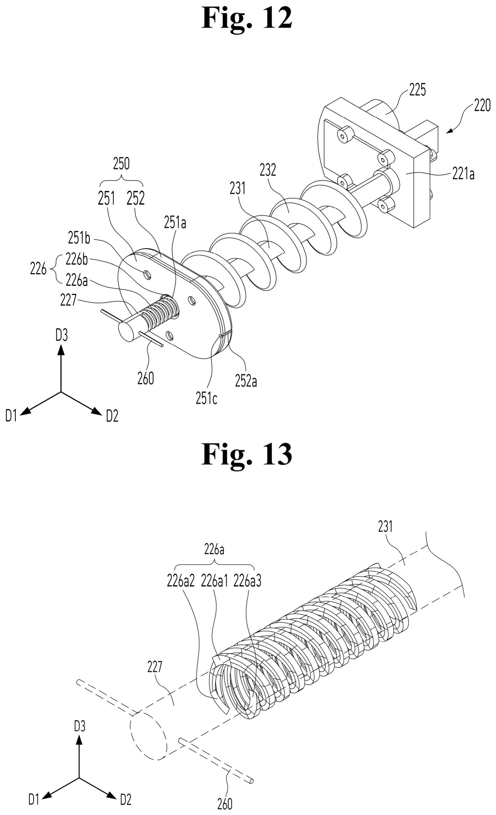

Meanwhile, referring to FIG. 12, the screw unit 226 may convert rotational motion of the discharge shaft 231 into linear reciprocating motion of the open-close unit 250.

An outer circumferential surface of the discharge shaft 231 and a through-hole 251a formed in the open-close frame 251 may be linked by the screw unit 226. Accordingly, when the discharge shaft 231 rotates, the open-close frame 251 may perform linear reciprocating motion in the first direction D1. Here, the open-close unit 250 may include the open-close frame 251 and a sealing cap 252.

The open-close frame 251 may be disposed in the third casing 216 and may have a plate shape. A through-hole 251a, through which the discharge shaft 231 penetrates, may be formed in a central portion of the open-close frame 251. In an embodiment of the present disclosure, the open-close frame 251 may be an elliptical plate, but the present disclosure is not limited thereto.

The open-close frame 251 may have a shape corresponding to the open-close port 213. The open-close frame 251 may be formed to be slightly larger than the open-close port 213 in order to seal the open-close port 213.

The sealing cap 252 may be disposed on the side of the open-close frame 251 facing the open-close port 213. The sealing cap 252 may be in close contact with the open-close port 213 and may seal the open-close port 213.

In an embodiment of the present disclosure, the sealing cap 252 may be made of an elastic material such as rubber, polyurethane, or silicone. In this case, due to the nature of the elastic material, the sealing cap 252 may adhere to the open-close port 213 and effectively block even small gaps. In particular, when small particles of feed or dust are present between the sealing cap 252 and the open-close port 213 during the opening or closing process, the sealing cap 252 being made of an elastic material may completely seal the port so that no fine gap is generated.

In addition, when feed accumulates or adheres near the open-close port 213, the sealing cap 252 may maintain a sealing effect by deforming its shape in response to feed pressure through the adaptability of the elastic material. This enhances the sealing performance especially when high-density feed is used.

Referring to FIG. 12, the screw unit 226 may connect the open-close frame 251 and the discharge shaft 231. Here, the screw unit 226 may rotatably couple the open-close frame 251 and the discharge shaft 231.

The screw unit 226 may include a first screw section 226a and a second screw section 226b. The first screw section 226a may be formed on an outer circumferential surface of the discharge shaft 231. In an embodiment of the present disclosure, the first screw section 226a may be a male screw.

The second screw section 226b may be formed on an inner circumferential surface of the through-hole 251a. In an embodiment of the present disclosure, the second screw section 226b may be a female screw.

A non-threaded section 227 may be formed at an end of the discharge shaft 231. Specifically, the non-threaded section 227 may be formed on the outer circumferential surface of the discharge shaft 231 adjacent to the first screw section 226a.

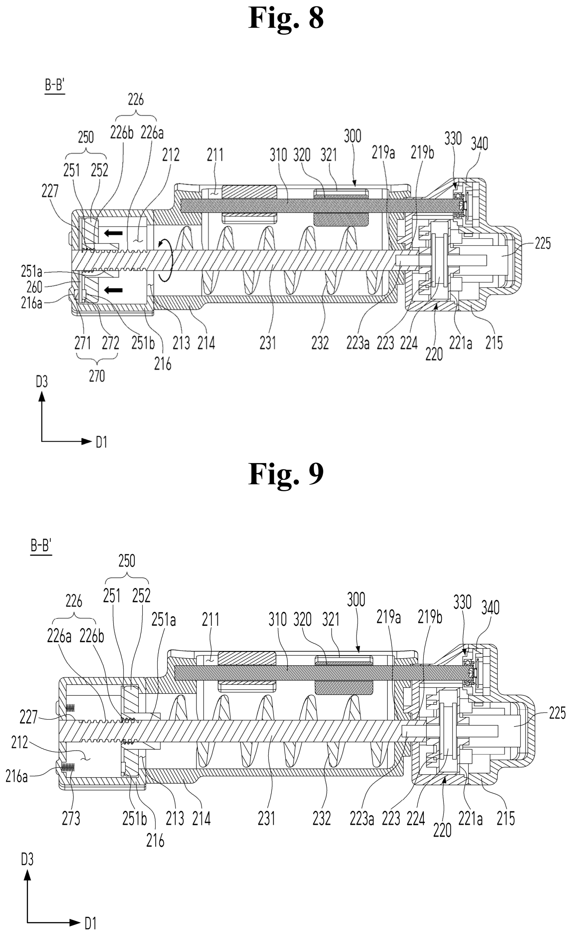

The non-threaded section 227 may form a smooth surface. Accordingly, based on the first direction D1, when the second screw section 226b is located at the non-threaded section 227, the open-close frame 251 may no longer move in the first direction D1. In other words, since rotational force of the discharge shaft 231 cannot be transmitted to the open-close frame 251, the position of the open-close frame 251 may be maintained. Referring to FIG. 8, a state in which the second screw section 226b is located at the non-threaded section 227 is illustrated. The open-close frame 251 may no longer move in the direction of the inner wall of the third casing 216.

A state in which the second screw section 226b is located at the non-threaded section 227 may be a state in which the open-close frame 251 has opened the open-close port 213.

Here, when the second screw section 226b is located at and engaged with the first screw section 226a, the rotational force of the discharge shaft 231 may be transmitted to the open-close frame 251. Accordingly, when the motor 225 rotates, the open-close frame 251 may perform linear reciprocating motion along the axial direction of the discharge shaft 231.

If the second screw section 226b is positioned at the non-threaded section 227, the rotational force of the discharge shaft 231 may not be transmitted to the open-close frame 251, so the open-close frame 251 may maintain a state in which the open-close port 213 is open. At this time, the discharge shaft 231 may idle.

Here, a movement range of the open-close frame 251 may be controlled by a rotation value of the motor 225. If the motor 225 rotates excessively, the open-close frame 251 may move excessively toward an inner wall of the third casing 216, causing damage or wear to the open-close frame 251 and the housing 210.

In an embodiment of the present disclosure, by forming the non-threaded section 227 at an end of the discharge shaft 231, even if the motor 225 rotates excessively, the open-close frame 251 no longer moves, thereby preventing problems such as damage or wear due to impact between the open-close frame 251 and the third casing 216.

In summary, when the second screw section 226b is engaged with the first screw section 226a, the open-close frame 251 may move in an axial direction of the discharge shaft 231, that is, in the first direction D1. Accordingly, the open-close frame 251 may open or close the discharge port 212 in response to a rotation direction of the second screw section 226b.

Based on the first direction D1, when the second screw section 226b is located at the non-threaded section 227, the rotational force of the discharge shaft 231 may not be transmitted to the open-close frame 251, so the position of the open-close frame 251 may be maintained.

Meanwhile, referring to FIG. 13, another embodiment of the first screw section 226a may have a structure in which a plurality of threads 226a1, 226a2, and 226a3 are arranged in a helical direction on an outer circumferential surface of the discharge shaft 231. The threads 226a1, 226a2, and 226a3 may be arranged along a circumferential direction of the outer circumferential surface of the discharge shaft 231 at predetermined intervals.

This may be a structure different from an embodiment of the first screw section 226a disclosed in FIG. 12. In one embodiment of the first screw section 226a, a single thread may be arranged in a helical direction on an outer circumferential surface of the discharge shaft 231. In this case, the embodiment of the first screw section 226a may be defined as a single-lead thread structure.

Another embodiment of the first screw section 226a may include three threads arranged on the outer circumferential surface of the discharge shaft 231. In this case, the three threads may be arranged at 120-degree intervals along a circumferential direction of the outer circumferential surface of the discharge shaft 231. In this case, the other embodiment of the first screw section 226a may be defined as a structure in which a triple-lead thread is arranged.

Compared to a single-lead thread, a triple-lead thread may more effectively suppress eccentricity with respect to a rotational center, because three threads arranged at 120-degree intervals engage with the second screw section 226b.

In the case of a single-lead thread, since the second screw section 226b rotates relying on a single thread, when the open-close frame 251 moves along the axial direction of the discharge shaft 231, twisting may occur slightly with each rotation during the movement.

In contrast, in the case of a triple-lead thread, since the second screw section 226b rotates relying on three threads arranged at 120-degree intervals, when the open-close frame 251 moves along the axial direction of the discharge shaft 231, the eccentricity of the second screw section 226b may be corrected at 120-degree intervals with each rotation. As a result, twisting that occurs when the open-close frame 251 moves along the axial direction of the discharge shaft 231 may be much more suppressed, and the movement of the open-close frame 251 may be smoother.

Referring to FIGS. 7 and 12, the discharge shaft 231 may be connected to the drive unit 220 and may move the open-close unit 250 in the first direction D1. In an embodiment of the present disclosure, the discharge shaft 231 may have an elongated rod shape with a circular cross-section.

The discharge shaft 231 may be disposed below the sensing shaft 310 inside the first casing 214.

One end of the discharge shaft 231 may pass through the first shaft hole 219a and the second shaft hole 219b, and may be connected to the link shaft 223a of the drive unit 220. As described above, the motor 225 may rotate the link shaft 223a through a connection structure among the first pulley 222, timing belt 224, and second pulley 223. One end of the discharge shaft 231 may be coupled to the link shaft 223a by bolt fastening, welding, or press fitting. Rotational force of the motor 225 may be transmitted to the discharge shaft 231 through the link shaft 223a.

The other end of the discharge shaft 231 may be rotatably connected to an inner wall of the third casing 216.

A first screw section 226a and a non-threaded section 227 may be formed on an outer circumferential surface of the discharge shaft 231. The non-threaded section 227 may be formed adjacent to the first screw section 226a at the other end of the discharge shaft 231.

A second screw section 226b may be formed in the through-hole 251a of the open-close frame 251, and the second screw section 226b may engage with the first screw section 226a. Accordingly, when the discharge shaft 231 rotates, the open-close frame 251 may move along an axial direction of the discharge shaft 231. When the open-close frame 251 sufficiently moves and the second screw section 226b is located at the non-threaded section 227, rotational force may not be transmitted to the open-close frame 251, and the open position of the open-close frame 251 may be maintained.

Meanwhile, a blade 232 may be wound and disposed in a helical direction on an outer circumferential surface of the discharge shaft 231. When the discharge shaft 231 rotates, the blade 232 may also rotate, and feed present between the helically wound blade 232 may move toward the open-close port 213.

As the discharge shaft 231 rotates, the open-close frame 251 remains in an open state of the open-close port 213, so the feed may be discharged into an internal space of the third casing 216 through the open-close port 213. Then, the feed may be discharged to the outside through the discharge port 212 formed in the third casing 216.

Referring to FIG. 7, the repulsion unit 270 may be arranged in connection between the open-close frame 251 and an inner wall of the third casing 216, and may move the open-close frame 251 toward the open-close port 213. The repulsion units 270 may be arranged in plurality between the open-close frame 251 and the inner wall of the third casing 216. In an embodiment of the present disclosure, three repulsion units 270 may be arranged at 120-degree intervals along a circumferential direction, but the present disclosure is not limited thereto. As the number of repulsion units 270 increases, repulsive force for moving the open-close frame 251 may also increase.

The repulsion unit 270 may include a first unipolar magnet 271 and a second unipolar magnet 272.

The first unipolar magnet 271 may be disposed on an inner wall of the third casing 216. A first groove 216a may be formed as a recessed portion in the inner wall of the third casing 216, and the first unipolar magnet 271 may be inserted and disposed in the first groove 216a.

The second unipolar magnet 272 may be disposed on a portion of the open-close frame 251 corresponding to the first unipolar magnet 271. A second groove 251b may be formed as a recessed portion on a side surface of the open-close frame 251, and the second unipolar magnet 272 may be inserted and disposed in the second groove 251b.

The first unipolar magnet 271 and the second unipolar magnet 272 may each form one pole of a permanent magnet. Also, the first unipolar magnet 271 and the second unipolar magnet 272 may form the same magnetic pole. In other words, both the first unipolar magnet 271 and the second unipolar magnet 272 may be positive poles or negative poles. Accordingly, when the first unipolar magnet 271 and the second unipolar magnet 272 come close to each other, repulsive force may act between them.

The repulsion unit 270 may apply a pushing force toward the open-close port 213 to the open-close frame 251 using the principle of repulsive force between permanent magnets.

As described above, when the discharge shaft 231 rotates, the open-close frame 251 may move in a direction away from the open-close port 213 by the screw unit 226.

The second screw section 226b of the open-close frame 251 may move to a position corresponding to the non-threaded section 227 on the discharge shaft 231.

In order to re-engage the second screw section 226b of the open-close frame 251 with the first screw section 226a, it may be necessary to slightly move the open-close frame 251 toward the open-close port 213.

The repulsion unit 270 may apply a force to the open-close frame 251 to allow the second screw section 226b to engage with the first screw section 226a.

As described above, when the second screw section 226b is located at the non-threaded section 227, the open-close frame 251 may maintain its position.

At this time, in order to move the open-close frame 251 again toward the open-close port 213, the second screw section 226b must be engaged with the first screw section 226a. If the second screw section 226b is not engaged with the first screw section 226a, the open-close frame 251 may not move even if the motor 225 is operated.

The repulsion unit 270 may apply a pushing force to the open-close frame 251 so that the second screw section 226b of the open-close frame 251 may engage with the first screw section 226a.

In summary, when the drive shaft of the motor 225 is rotated in a direction in which the open-close frame 251 opens the open-close port 213, the open-close frame 251 may move along the first direction D1, and the first screw section 226a may be positioned at the non-threaded section 227. Even if the motor 225 continues to rotate further, the discharge shaft 231 may idle, and thus, the open-close frame 251 does not move any further. That is, the fully moved state of the open-close frame 251 is a state in which the first screw section 226a and the second screw section 226b are not engaged with each other. Therefore, in order for the open-close frame 251 to be moved again when the drive shaft of the motor 225 is rotated in the direction in which the open-close frame 251 moves toward the open-close port 213, the first screw section 226a and the second screw section 226b must be engaged with each other. The repulsion unit 270 pushes the open-close frame 251 through repulsive force of a permanent magnet, such that the second screw section 226b of the open-close frame 251 is engaged with the first screw section 226a of the discharge shaft 231. Accordingly, when the drive shaft of the motor 225 is rotated in the direction in which the open-close frame 251 moves toward the open-close port 213, the second screw section 226b may engage with the first screw section 226a and may move along the axial direction of the discharge shaft 231. As a result, the open-close frame 251 may seal the open-close port 213.

Meanwhile, referring to FIG. 9, another embodiment of the repulsion unit 270 may include an elastic body 273. In an embodiment of the present disclosure, the elastic body 273 may be a coil spring, but the present disclosure is not limited thereto.

The elastic body 273 may be disposed in the first groove 216a.

When the discharge shaft 231 rotates, the open-close frame 251 may move in a direction away from the open-close port 213 by the screw unit 226.

The second screw section 226b of the open-close frame 251 may move to a position corresponding to the non-threaded section 227 on the discharge shaft 231.

In order to re-engage the second screw section 226b with the first screw section 226a, it may be necessary to slightly move the open-close frame 251 toward the open-close port 213.

The elastic body 273 may apply an elastic force to the open-close frame 251 so that the second screw section 226b engages with the first screw section 226a.

The elastic body 273 may be in a compressed state as the open-close frame 251 moves toward and comes into contact with the elastic body 273.

At this time, the elastic body 273 continuously applies elastic force to the open-close frame 251, and accordingly, a pushing force acts on the open-close frame 251 in the direction of the open-close port 213. As a result, the second screw section 226b may maintain contact with the first screw section 226a.

Subsequently, when the drive shaft of the motor 225 is rotated in the direction in which the open-close frame 251 moves toward the open-close port 213, the second screw section 226b may move along the first screw section 226a. Accordingly, the open-close frame 251 may seal the open-close port 213 again.

Referring to FIGS. 7, 8, and 12, the foreign-substance removal bar 260 may remove foreign substances from the first unipolar magnet 271.

The foreign-substance removal bar 260 may protrude radially from an outer circumferential surface of the discharge shaft 231. In an embodiment of the present disclosure, foreign-substance removal bars 260 are arranged in two on the outer circumferential surface of the discharge shaft 231 at 180-degree intervals, but the present disclosure is not limited to this.

When the discharge shaft 231 rotates in the present disclosure, the foreign-substance removal bar 260 may also rotate together.

The foreign-substance removal bar 260 may be positioned between the first unipolar magnet 271 and the second unipolar magnet 272.
Specifically, the foreign-substance removal bar 260 may be disposed adjacent to a surface of the first unipolar magnet 271.

Accordingly, when the discharge shaft 231 rotates, the foreign-substance removal bar 260 may rotate and remove foreign substances present on the surface of the first unipolar magnet 271. That is, the foreign-substance removal bar 260 may sweep and remove foreign substances present on the surface of the first unipolar magnet 271.

When foreign substances are present on the surface of the first unipolar magnet 271, repulsive force may not be properly generated between the first unipolar magnet 271 and the second unipolar magnet 272. In this case, pushing force of the repulsion unit 270 to the open-close frame 251 may become weak, and the second screw section 226b may not engage with the first screw section 226a. In such a case, even if the motor 225 operates, the open-close frame 251 may not move. Therefore, it is necessary to prevent foreign substances from being present on the surface of the first unipolar magnet 271, and the foreign-substance removal bar 260 may remove the foreign substances from the surface of the first unipolar magnet 271 in accordance with the rotation cycle of the discharge shaft 231. Accordingly, the repulsive force of the repulsion unit 270 may be maintained, and the first screw section 226a and the second screw section 226b may be stably engaged.

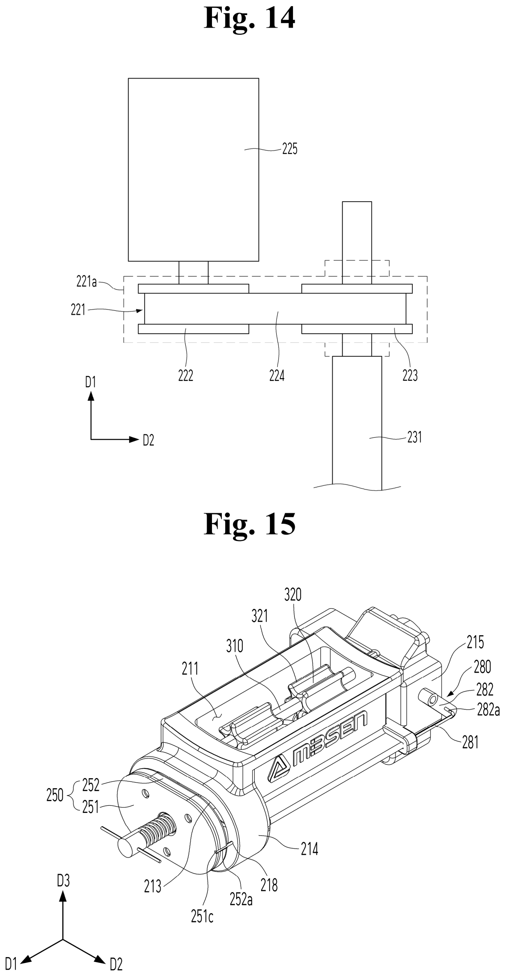

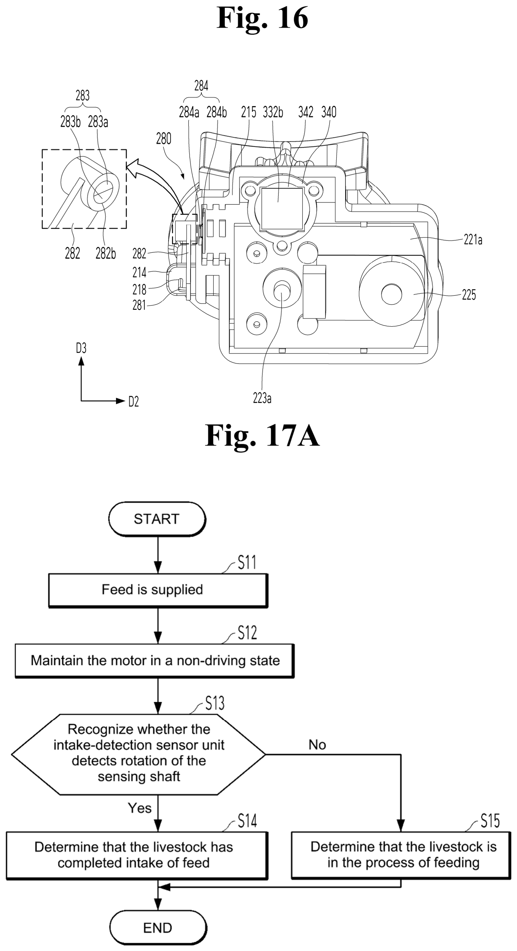

Referring to FIGS. 15 and 16, the open-close detection unit 280 may be disposed inside the housing 210 and may detect a position of the open-close unit 250.

The open-close detection unit 280 may include an open-close detection bar 281, an open-close detection sensor unit 284, a rotary link 282, and a magnetic block 283. These components are not essential components of the open-close detection unit 280, and the open-close detection unit 280 may include more or fewer components than those described above.

The rotary link 282 may be disposed in the second casing 215 of the housing 210. A link hole 282a may be formed at a lower portion of the rotary link 282. The link hole 282a may be extended along a longitudinal direction of the rotary link 282. One end of the open-close detection bar 281 may be fixed to the link hole 282a. Accordingly, when the open-close frame 251 moves, the rotary link 282 may rotate.

The open-close detection bar 281 may have an elongated rod shape. One end of the open-close detection bar 281 may be connected to the link hole 282a of the rotary link 282. The other end of the open-close detection bar 281 may be connected to the open-close frame 251 of the open-close unit 250. A coupling groove 251c may be formed on a side portion of the open-close frame 251, and the other end of the open-close detection bar 281 may be coupled to the coupling groove 251c by press fitting, welding, or the like.

A bar hole 218 may be formed inside the housing 210. The bar hole 218 may be formed to penetrate a side portion of the first casing 214.

The open-close detection bar 281 may be inserted and disposed in the bar hole 218.

One end of the open-close detection bar 281 may pass through the bar hole 218 and be hooked and connected to the link hole 282a of the rotary link 282. The other end of the open-close detection bar 281 may pass through the bar hole 218 and be connected to the open-close frame 251.

Referring to FIG. 15, it can be confirmed that the other end of the open-close detection bar 281 is connected to a side portion of the open-close frame 251. At this time, a cap groove 252a into which the open-close detection bar 281 is inserted may be formed in a side portion of the sealing cap 252.

Referring to FIG. 16, the magnetic block 283 may be disposed on a side facing the open-close detection sensor unit 284 at an upper side surface of the rotary link 282. A magnet mounting groove 282b may be formed as a concave portion in an inward direction on the upper side surface of the rotary link 282. The magnetic block 283 may be disposed in the magnet mounting groove 282b.

In an embodiment of the present disclosure, the magnetic block 283 may be a permanent magnet including both a positive pole 283a and a negative pole 283b. Also, the positive pole 283a and the negative pole 283b may be disposed respectively at an upper side and a lower side based on a third direction D3.

The open-close detection sensor unit 284 may be disposed in the second casing 215 of the housing 210. The open-close detection sensor unit 284 may include a magnetic detection sensor 284a and a sensor board 284b electrically connected to the magnetic detection sensor 284a.

The magnetic detection sensor 284a may detect microscopic rotation of the magnetic block 283. The magnetic detection sensor 284a detects magnetic changes generated when the magnetic block 283 rotates, and the sensor board 284b may transmit magnetic change data to the controller. The controller may recognize at least one of a rotation angle and a rotation direction of the rotary link 282 based on the magnetic change data, and may recognize a current position of the open-close unit 250 based thereon.

In an embodiment of the present disclosure, since the magnetic block 283 is a permanent magnet including both a positive pole and a negative pole, when the magnetic block 283 microscopically rotates, the positive pole and the negative pole respectively rotate, and a microscopic magnetic variation may occur.

The magnetic detection sensor 284a may detect such microscopic magnetic variation and may determine that the magnetic block 283 has rotated.

The open-close detection sensor unit 284 may be arranged to be spaced apart from the magnetic block 283 by a predetermined distance.

Referring to FIG. 16, the magnetic block 283 and the open-close detection sensor unit 284 may be arranged to be spaced apart from each other with a microscopic gap along a second direction D2.

The open-close detection sensor unit 284 may detect magnetic variation data of the magnetic block 283 and may transmit the magnetic variation data to the controller.

That is, when the open-close detection sensor unit 284 detects the rotation of the magnetic block 283, the controller may determine a movement amount of the open-close frame 251.

Meanwhile, the open-close detection sensor unit 284 may precisely detect a position of the open-close frame 251 through rotation of the magnetic block 283.

If feed or foreign substance is caught in a movement path of the open-close frame 251 and the movement of the open-close frame 251 is not normal, the open-close detection sensor unit 284 may detect this.

For example, the motor 225 may be driven to rotate the discharge shaft 231 and to move the open-close frame 251 in a direction of opening the open-close port 213. The open-close frame 251 may move leftward by the screw unit 226. If the open-close frame 251 has not moved to the non-threaded section 227 and the open-close frame 251 cannot move further leftward, the rotational link 282 has not rotated by a preset angle, and the magnetic block 283 may not sufficiently rotate. Since the magnetic block 283 has not sufficiently rotated, the controller may recognize, through the open-close detection sensor unit 284, that a magnetic variation value according to rotation of the magnetic block 283 is lower than a preset value. In this case, the controller may recognize that feed or foreign substance is caught between the open-close frame 251 and an inner wall of the third casing 216 or in the first screw section 226a.

As another example, although the motor 225 is driven in a forward direction to rotate the discharge shaft 231 in one direction, the open-close frame 251 may not completely open the open-close port 213. Or, although the motor 225 is driven in a reverse direction to rotate the discharge shaft 231 in the opposite direction, the open-close frame 251 may not completely close the open-close port 213. The controller may recognize such a situation through a magnetic variation value recognized through the open-close detection sensor unit 284. In this case, the controller may recognize that feed or foreign substance is caught between the open-close frame 251 and the open-close port 213 or in the first screw section 226a.

When the above-described situations are detected, the controller may repeatedly drive the motor 225 alternately in a forward direction and a reverse direction. Accordingly, the discharge shaft 231 may repeatedly rotate alternately in the forward direction and the reverse direction. The open-close frame 251 may reciprocate toward an inner wall of the third casing 216 or toward the open-close port 213 by the screw unit 226, and may continuously apply impacts to feed or foreign substance. The feed or foreign substance may receive an impact due to collision with the open-close frame 251, may be detached from a caught portion, and may be discharged to the outside through the discharge port 212.

The open-close detection unit 280 according to an embodiment of the present disclosure may, through the above-described configuration, determine whether the open-close frame 251 opens or closes the open-close port 213, and may also detect whether feed or foreign substance is caught between the open-close frame 251 and an inner wall of the third casing 216 or the open-close port 213. In addition, the controller may remove the feed or foreign substance through control of a rotation direction of the motor 225.

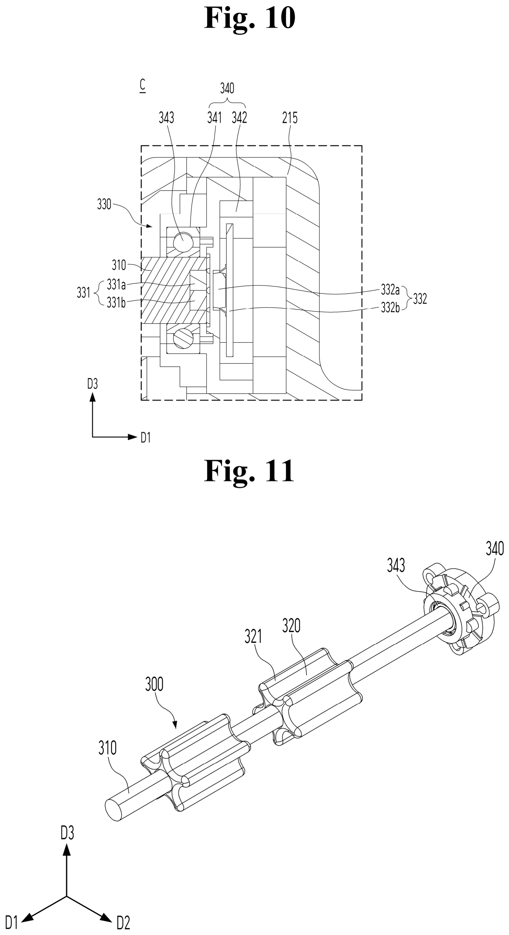

Referring to FIGS. 7 and 11, the intake detection unit 300 may be arranged at the discharge hole 413 and may detect whether livestock has completed intake of feed.

The intake detection unit 300 may include a sensing shaft 310, a rotary block 320, a rotation detection unit 330, and a support frame 340. The above-described components are not essential components constituting the intake detection unit 300, and therefore, the intake detection unit 300 may include more or fewer components than those described above.

The sensing shaft 310 may be arranged in a first direction D1 at a lower portion of the discharge hole 413. Specifically, the sensing shaft 310 may be arranged above the discharge shaft 231 in the first casing 214. In an embodiment of the present disclosure, the sensing shaft 310 may have a rod shape with a circular cross-section, but the present disclosure is not limited thereto.

The rotary block 320 may be arranged on an outer circumferential surface of the sensing shaft 310. A rotary wing 321 protruding in a radial direction may be formed on the rotary block 320.

The rotary wing 321 may be arranged in plurality along a circumferential direction on the rotary block 320. In an embodiment of the present disclosure, the rotary wing 321 may have a curved shape, but the present disclosure is not limited thereto.

Referring to FIG. 7, a top height of the rotary wing 321 disposed at an uppermost position of the rotary block 320 among the plurality of rotary wings 321 may correspond to a top height of the opening 211.

When livestock consumes all the feed contained in the feeding container 410, a mouth or tongue of the livestock touches the rotary wing 321 through the opening 211. At this time, the rotary block 320 and the sensing shaft 310 may microscopically rotate.

In other words, since the top height of the rotary wing 321 protrudes to the height of the discharge hole 413, when the livestock consumes all the feed in the feeding container 410, the livestock touches the rotary wing 321.

Referring to FIG. 2, in an embodiment of the present disclosure, in order to allow smooth discharge of feed or drinking water, the discharge hole 413 may be extended along the first direction D1. In this case, it is not known to which part of the discharge hole 413 the mouth or tongue of the livestock may enter. Therefore, a plurality of rotary blocks 320 may be arranged along a length direction D1 of the sensing shaft 310.

In an embodiment of the present disclosure, two rotary blocks 320 may be arranged on the sensing shaft 310 corresponding to a length of the discharge hole 413 along the first direction D1. In this case, since a range in which the mouth or tongue of the livestock can touch the rotary wing 321 increases, it is possible to more accurately determine whether the livestock has consumed all the feed in the feeding container 410.

Based on a third direction D3, the sensing shaft 310 and the rotary block 320 may be arranged between the discharge hole 413 and the blade 232. When feed remaining in the feeding container 410 is discharged, the feed may pass through the sensing shaft 310 and the rotary block 320 and may fall to the discharge shaft 231 and the blade 232.

Referring to FIGS. 10 and 11, the support frame 340 may be arranged in the second casing 215.

The support frame 340 may include a bearing accommodating section 341 and a sensor accommodating section 342.

The bearing accommodating section 341 may be formed inside the support frame 340, and a bearing unit 343 may be accommodated therein. The bearing unit 343 may be connected to an end of the sensing shaft 310 and may support rotation of the sensing shaft 310.

The sensor accommodating section 342 may be formed inside the support frame 340, on an inner side of the bearing accommodating section 341, and an intake-detection sensor unit 332 may be accommodated therein.

The rotation detection unit 330 may be arranged in connection with an end of the sensing shaft 310 and the support frame 340 and may detect rotation of the sensing shaft 310. The rotation detection unit 330 may be arranged in the second casing 215 of the housing 210.

The rotation detection unit 330 may include a magnetic unit 331 and an intake-detection sensor unit 332.

The magnetic unit 331 may be arranged at an end of the sensing shaft 310.

In an embodiment of the present disclosure, the magnetic unit 331 may be a permanent magnet including both a positive pole 331a and a negative pole 331b. In addition, the positive pole 331a and the negative pole 331b may be arranged at an upper side and a lower side, respectively, based on a third direction D3.

The intake-detection sensor unit 332 may be arranged to be spaced apart from the magnetic unit 331 by a predetermined distance.

In an embodiment of the present disclosure, the magnetic unit 331 and the intake-detection sensor unit 332 may be arranged to be spaced apart from each other with a microscopic gap along a first direction D1.

The intake-detection sensor unit 332 may measure magnetic variation data of the magnetic unit 331 and may transmit the magnetic variation data to the controller. The intake-detection sensor unit 332 may include a magnetic detection sensor 332a and a sensor board 332b. The magnetic detection sensor 332a may detect a magnetic variation generated when the magnetic unit 331 rotates, and the sensor board 332b may transmit the magnetic variation data to the controller.

That is, by detecting the magnetic variation of the magnetic unit 331, the intake-detection sensor unit 332 may allow the controller to determine whether livestock has completed intake of feed.

Specifically, when livestock consumes all the feed contained in the feeding container 410, a mouth or tongue of the livestock touches the rotary wing 321. At this time, the rotary block 320 and the sensing shaft 310 may microscopically rotate.

Accordingly, the magnetic unit 331 arranged at an end of the sensing shaft 310 microscopically rotates.

Then, by detecting the microscopic rotation of the magnetic unit 331, the intake-detection sensor unit 332 may allow the controller to determine that the livestock has consumed all the feed in the feeding container 410.

The configuration of the electronic feeder 100 according to an embodiment of the present disclosure is as described above, and hereinafter, a control method of the electronic feeder 100 will be described.

FIG. 17A discloses one embodiment of a control method for determining whether livestock has completed intake of feed in the electronic feeder 100.

Referring to FIG. 17A, first, feed is supplied (S11) into the feeding container 410, and livestock may insert its head into the feeding container 410 to consume the feed.

In one embodiment of the present disclosure, the controller may maintain the motor 225 in a non-driving state (S12).

In the non-driving state of the motor 225, the discharge shaft 231 may not rotate.

Since the discharge shaft 231 does not rotate, the feed accumulated in the feeding container 410 may not be discharged. Meanwhile, when the feed falls into the first casing 214 through the discharge hole, the feed may touch the rotary wing 321 and the sensing shaft 310 may microscopically rotate, but if the rotation of the sensing shaft 310 is very slight, the controller may recognize that the livestock has not yet consumed all the feed.

The controller may recognize whether the intake-detection sensor unit 332 detects rotation of the sensing shaft 310 (S13).

Meanwhile, a case where the sensing shaft 310 rotates (excluding microscopic movement) is when livestock touches the rotary wing 321.

A case where a tongue or mouth of the livestock touches the rotary wing 321 may be when feed accumulated in the feeding container 410 is completely removed and the discharge hole 413 is exposed. In other words, when the livestock consumes all the feed accumulated in the feeding container 410, the tongue or mouth of the livestock may touch the rotary wing 321.

When the rotary wing 321 is touched, the sensing shaft 310 may rotate.

The intake-detection sensor unit 332 may detect a magnetic variation of the magnetic unit 331 and may detect that the sensing shaft 310 has rotated.

Therefore, when the intake-detection sensor unit 332 detects rotation of the sensing shaft 310 (S13, Yes), the controller may determine that the livestock has completed intake of feed (S14).

Conversely, when the intake-detection sensor unit 332 does not detect rotation of the sensing shaft 310 (S13, No), the controller may determine that the livestock is in the process of feeding (S15).

In one embodiment of the present disclosure, as in the above-described control method, it is possible to accurately determine whether livestock has completed feed intake under a condition in which the motor 225 and the discharge shaft 231 are not driven.

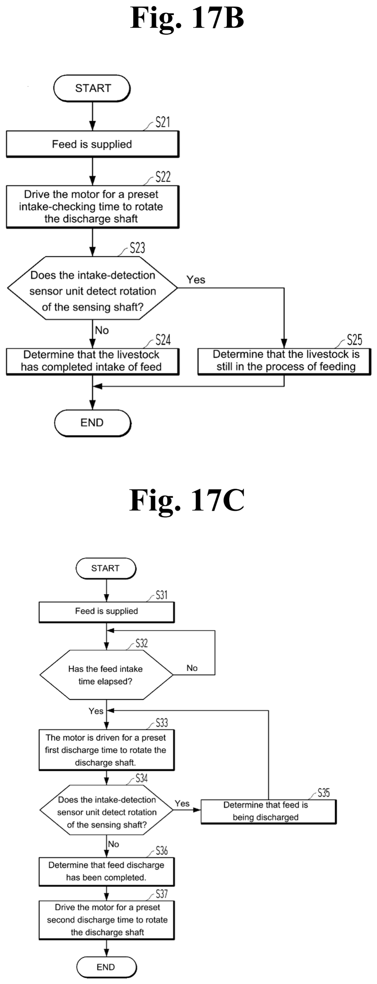

FIG. 17B discloses another embodiment of a control method for determining whether livestock has completed intake of feed in the electronic feeder 100.

Referring to FIG. 17B, first, feed is supplied (S21) into the feeding container 410, and livestock may insert its head into the feeding container 410 to consume the feed.

In another embodiment of the present disclosure, the controller may drive the motor 225 for a preset intake-checking time to rotate the discharge shaft 231 (S22). Here, the intake-checking time may be a very short time. For example, the intake-checking time may be within a range of 0.1 to 1 second. In other words, the discharge shaft 231 may be rotated slightly for a very short time.

The controller may recognize whether the intake-detection sensor unit 332 detects rotation of the sensing shaft 310 when the discharge shaft 231 rotates (S23).

When the discharge shaft 231 rotates, if feed is accumulated in the feeding container 410, vibration, impact, and the like may be transmitted due to the rotation of the discharge shaft 231. Accordingly, the feed may move, and feed located around the sensing shaft 310 and the rotary block 320 may touch the sensing shaft 310 or the rotary block 320. At this time, the sensing shaft 310 may rotate.

Conversely, when feed is not accumulated in the feeding container 410, even if the discharge shaft 231 rotates, since feed is absent, the sensing shaft 310 may not rotate.

The intake-detection sensor unit 332 may detect a magnetic variation of the magnetic unit 331 and may detect that the sensing shaft 310 has rotated.

Therefore, when the intake-detection sensor unit 332 detects rotation of the sensing shaft 310 (S23, Yes), the controller may determine that feed still remains in the feeding container 410 and that the livestock is still in the process of feeding (S25).

Conversely, when the intake-detection sensor unit 332 does not detect rotation of the sensing shaft 310 (S23, No), the controller may determine that no feed remains in the feeding container 410 and that the livestock has completed intake of feed (S24).

In another embodiment of the present disclosure, as in the above-described control method, it is possible to precisely determine whether the livestock has completed feed intake under a condition in which the motor 225 and the discharge shaft 231 are driven.

FIG. 17C discloses an embodiment of a control method for discharging feed in the electronic feeder 100.

Referring to FIG. 17C, first, feed is supplied (S31) into the feeding container 410, and livestock may insert its head into the feeding container 410 to consume the feed.

The controller may check whether a feed intake time has elapsed (S32).

If the feed intake time has not elapsed (S32, No), the controller may continuously check whether the feed intake time has elapsed.

If the feed intake time has elapsed (S32, Yes), the controller may determine that the feed is to be discharged.

The controller may drive the motor 225 for a preset first discharge time to rotate the discharge shaft 231 (S33).

Here, the first discharge time may be a sufficient time for all the feed accumulated in the feeding container 410 to be discharged. For example, it may be a sufficient time interval of about 30 to 180 seconds. The motor 225 may operate within a range of 60 to 120 RPM. However, the present disclosure is not limited thereto.

The controller may check whether the intake-detection sensor unit 332 detects a magnetic variation of the magnetic unit 331 and detects that the sensing shaft 310 has rotated (S34).

When the intake-detection sensor unit 332 detects rotation of the sensing shaft 310 (S34, Yes), the controller may recognize that feed still remains in the feeding container 410 and is being discharged from the discharge hole 413 into the first casing 214. That is, the controller may determine that feed is being discharged (S35).

When it is determined that the feed is being discharged, the motor 225 may be additionally driven for the first discharge time so that the feed is discharged for a sufficient time (S33).

Conversely, when the controller recognizes that the magnetic detection sensor has not detected rotation of the sensing shaft 310 (S34, No), the controller may determine that no feed remains in the feeding container 410 (S36). That is, since feed is absent in the first casing 214, the sensing shaft 310 may not rotate. At this time, it may be determined that feed discharge has been completed.

When it is determined that feed discharge has been completed, the motor 225 may be additionally driven for a preset second discharge time to rotate the discharge shaft 231 (S37). Even after completion of feed discharge is detected, the discharge shaft 231 may be further rotated to ensure completion of feed discharge.

Here, the second discharge time may be the same as or shorter than the first discharge time. For example, when the first discharge time is a sufficient time interval of about 30 to 180 seconds, the second discharge time may not exceed 30 seconds. For example, it may be set within a range of 10 to 30 seconds. However, the present disclosure is not limited thereto.

After the second discharge time has elapsed, the controller may determine that the feed discharge has been completed. In this case, the controller may drive the motor 225 in a reverse direction so that the open-close unit 250 seals the open-close port 213.

According to some embodiments of the present disclosure, the controller may analyze data received from the intake-detection sensor unit 332 and the rotation detection unit 330 to determine whether livestock has completed intake of feed. The controller may check whether the sensing shaft 310 rotates based on magnetic variation data of the magnetic unit 331 detected by the intake-detection sensor unit 332, and may determine a feed intake state of the livestock based on this data. If rotation of the sensing shaft 310 is not detected, the controller may determine that the livestock is still in the process of feeding, and in this case, does not drive the discharge shaft 231. Conversely, when rotation of the sensing shaft 310 is detected, the controller may determine that the livestock has completed feed intake and may command the discharge shaft 231 to operate to discharge the remaining feed or to perform cleaning.

According to some embodiments of the present disclosure, the controller may control operations of the discharge shaft 231 and the drive unit 220 in real time to coordinate so that each component of the electronic feeder operates smoothly. In particular, the controller may set a rotation time and a speed of the discharge shaft 231 to control discharge of only an appropriate amount of feed, and when a problem occurs during discharge, may remove an obstacle by repeatedly driving the motor 225 in a forward direction and a reverse direction. In this way, the controller may improve stability and reliability of the electronic feeder.

According to some embodiments of the present disclosure, the controller may be designed so that a user can preset a supply cycle and an amount of feed. The user may set a feed supply interval, intake-checking time, discharge time, and the like through an input interface of the controller, and such set values may be stored in built-in memory of the controller. Through this, the controller may automatically supply or discharge feed according to the set criteria.

According to some embodiments of the present disclosure, the controller may manage a hygiene state of the feeding container 410 in association with the cleaning unit 500. The controller may operate the cleaning unit 500 according to a time or cycle designated by the user to clean the feeding container 410, and after cleaning, may control so that cleaning water is completely discharged through the discharge hole 413. The controller may also check, based on data received from the cleaning unit 500, whether the cleaning has been normally completed.

According to some embodiments of the present disclosure, the controller may accurately determine a feed intake state of livestock, and after detection of completion of intake, may supply feed in divided amounts according to an appropriate supply amount and cycle.

Specifically, the controller may determine whether feed intake has been completed based on data received from the intake-detection sensor unit 332. When completion of intake is detected, the controller may immediately operate the discharge unit 200 to discharge remaining feed in the feeding container 410, and thereafter may drive the motor unit 225 to seal the discharge hole 413 through the open-close unit 250. After completion of feed discharge and sealing, the controller may supply feed to the feeding container 410 according to a divided feeding mode. Initially, the controller may supply a first supply amount (for example, 2.0 kg) of feed at once according to the set criteria, and subsequently, each time completion of feed intake is detected, may additionally supply a second supply amount (for example, 0.5 kg) of feed. Here, the second supply amount may be smaller than the first supply amount. When completion of feed intake is repeatedly detected, the controller may repeat supply of feed until a total supply amount set by the user (for example, 5.0 kg) is satisfied. Meanwhile, each time completion of feed intake is detected, the controller may perform a feed discharge and sealing process. Such a feeding method plays an important role in helping post-weaning body weight not decrease and stably increase. An increase in post-weaning body weight improves a growth rate of livestock, and particularly, in the case of sows, may contribute to improvement of reproductive performance in the next parity by minimizing backfat thickness loss. As a result, it is possible to maintain health of sows and improve reproductive performance, thereby increasing overall productivity.

According to some embodiments of the present disclosure, the controller may control so that a total feeding amount does not exceed a preset additional allowance amount (for example, 20% of a one-time feeding amount) based on a user-set one-time feeding amount (for example, 5.0 kg). Specifically, after supplying an initial set amount (for example, 2.0 kg), when completion of feed intake is detected, the controller may repeatedly supply an additional supply amount (for example, 0.5 kg) and may continue to check whether feed intake has been completed. When completion of feed intake is repeatedly detected, the controller may continuously supply feed step by step up to the one-time feeding amount (for example, 5.0 kg). If a state in which feed intake completion is not detected continues for a predetermined time (for example, 30 minutes) or longer, the controller may control the electronic feeder to perform additional supply of feed. However, when feed intake completion is continuously detected, the controller may continuously supply feed in the additional supply amount while limiting so that the total feeding amount does not exceed 6.0 kg (one-time feeding amount 5.0 kg + additional allowance amount 20%). This can maintain appropriate feeding according to the feed intake pattern of livestock, prevent feed waste, and prevent livestock obesity and health problems caused by excessive feed intake.

The controller of the present disclosure may maximize efficiency of feed supply and minimize feed waste through the above-described functions. In addition, the controller may record data according to each supply cycle to provide insights for optimization of a rearing environment.

According to some embodiments of the present disclosure, when feed intake completion is not detected for a predetermined time (for example, 30 minutes) after feed supply (or additional supply), the controller may terminate a feed supply cycle and may perform a feed discharge and sealing process. In addition, the controller may perform an automatic cleaning process.

Specifically, the controller may activate the cleaning-water supply unit 510 to spray cleaning water from an upper end of the feeding container 410 through the cleaning-water spray unit 520. The cleaning water may be evenly sprayed onto an inner wall portion 410a of the feeding container 410 through a plurality of spray holes 523 formed in the spray pipe 521, and may remove residual feed and contaminants. When the cleaning process is completed, the controller may operate the discharge unit 200 to discharge the cleaning water to the outside through the discharge hole 413. In this process, the discharge shaft 231 rotates to smoothly perform discharge, and after discharge is completed, the discharge hole 413 may be sealed through the open-close unit 250.

Meanwhile, according to some embodiments of the present disclosure, the controller may perform the above-described automatic cleaning process multiple times so that the interior of the feeding container 410 is kept clean. However, the present disclosure is not limited thereto.

In an embodiment of the present disclosure, through the above-described control method, it is possible to check a discharge state of feed in real time, and also to precisely determine whether discharge of feed has been completed.

Through the above-described structure and control method, the present disclosure may accurately determine whether livestock has completed feed intake. In addition, it may stably discharge feed and drinking water. Further, since the feeding container can be quickly cleaned as a whole, hygiene can be improved. Ultimately, livestock rearing performance may be improved, and livestock obesity and feed waste may be prevented, thereby improving appropriateness of livestock management.

## Claims

1. An electronic feeder, comprising:
a feeding container in which a discharge hole is formed; and
an intake detection unit which is arranged below the discharge hole and configured to detect whether livestock has completed intake of feed contained in the feeding container;
**characterized in that** the intake detection unit comprises:
a sensing shaft which is arranged below the discharge hole and is rotated by mouth or tongue of the livestock introduced into the discharge hole;
a support frame connected to an end of the sensing shaft; and
a rotation detection unit which is arranged in connection with the end of the sensing shaft and the
support frame and configured to detect rotation of the sensing shaft;
**characterized in that**, by detecting whether the sensing shaft has been rotated through the rotation detection unit, **it** is determined whether the livestock has completed the intake of the feed.

2. The electronic feeder according to claim 1, **characterized in that** the intake detection unit further comprises:
a rotary block which is disposed on an outer circumferential surface of the sensing shaft; and
a rotary wing which protrudes in a radial direction from the rotary block; and
**characterized in that** the rotary wing is arranged in a plurality along a circumferential direction on the rotary block.

3. The electronic feeder according to claim 1, **characterized in that** the rotation detection unit comprises:
a magnetic unit which is disposed at the end of the sensing shaft; and
an intake-detection sensor unit which is disposed on the support frame and configured to detect a magnetic variation of the magnetic unit.

4. The electronic feeder according to claim 3, **characterized in that** the intake-detection sensor unit is disposed to be spaced apart from the magnetic unit by a predetermined distance.

5. The electronic feeder according to claim 3, **characterized in that** the support frame comprises:
a bearing unit configured to support rotation of the sensing shaft;
a bearing accommodating section in which the bearing unit is received; and
a sensor accommodating section which is formed on an inner side of the bearing accommodating section and in which the intake-detection sensor unit is received.

6. The electronic feeder according to claim 3, further comprising a controller configured to:
determine that livestock has completed the intake of feed when rotation of the sensing shaft is detected through the intake-detection sensor unit, and
determine that the livestock is in process of feeding when the rotation of the sensing shaft is not detected through the intake-detection sensor unit.
